(19) Europäisches Patentamt
European Patent Office
Office européen des brevets

(11) **EP 4 672 066 A1**

(12) **DEMANDE DE BREVET EUROPEEN**

(43) Date de publication:
**31.12.2025 Bulletin 2026/01**

(21) Numéro de dépôt: **25185948.4**

(22) Date de dépôt: **27.06.2025**

(51) Classification Internationale des Brevets (IPC):
**G06F 21/62** $^{(2013.01)}$ **H04L 9/00** $^{(2022.01)}$
**H04L 9/08** $^{(2006.01)}$

(52) Classification Coopérative des Brevets (CPC):
**G06F 21/6254; G06F 21/6227; H04L 9/008; H04L 9/0894**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **28.06.2024 FR 2407043**

(71) Demandeurs:
• **Expleo France**
**78180 Montigny-le-Bretonneux (FR)**
• **COMMISSARIAT À L'ÉNERGIE ATOMIQUE ET AUX**
**ÉNERGIES ALTERNATIVES**
**75015 Paris (FR)**

(72) Inventeurs:
• **QUERO, Nicolas**
**75015 PARIS (FR)**
• **SIRDEY, Renaud**
**91191 Gif-sur-Yvette Cedex (FR)**
• **BOUDGUIGA, Aymen**
**91191 Gif-sur-Yvette Cedex (FR)**
• **KARAM, Nadir**
**92160 Antony (FR)**
• **SINH, Quentin**
**93160 Noisy-Le-Grand (FR)**

(74) Mandataire: **Santarelli**
**Tour Trinity**
**1 bis Place de la Défense**
**92400 Courbevoie (FR)**

(54) **PROCEDE D'INTERROGATION CONFIDENTIELLE DE BASES DE DONNEES**

(57) Procédé d'interrogation confidentielle d'une base (DB) de données ((DF,DI,DA)) comprenant des données de filtrage (DF) chiffrées et des données d'identification (DI) sous un chiffrement permettant un calcul sur données chiffrées.

Le procédé comprend les étapes suivantes :
S10) un client définit une requête (m,c) comprenant un indice (m) et une condition (c) ;
une porte dérobée d'extraction (T(m)) est alors calculée pour cet indice (m) ;
S20) le serveur (SP) extrait une base de données de filtrage réduite (RDBF) des données de filtrage correspondant à l'indice ;
S30) le serveur (SP) extrait une base de données d'identification réduite (RDBI) des données d'identification correspondant à la base de données de filtrage réduite ;
S40) par requêtage confidentiel, le serveur identifie les données d'identification satisfaisant la condition (c) ;
S50) le serveur envoie au client un résultat ($[res]_{FHE}$) déduit des données d'identification, que le client déchiffre (S60).

[Fig. 2]

**Description**

**DOMAINE TECHNIQUE DE L'INVENTION**

L'invention concerne les procédés d'interrogation confidentielle de bases de données.

**ÉTAT DE LA TECHNIQUE**

Dans le domaine informatique, les bases de données ont connu un développement considérable, grâce à la facilité d'accès qu'elles procurent à de grandes masses d'informations.

Dans ce cadre, des méthodes de stockage et d'interrogation de bases de données spécifiques ont été développées pour les situations dans lesquelles les données enregistrées sont si sensibles que l'on ne veut pas que le serveur en ait connaissance, et où de plus on souhaite pouvoir effectuer des recherches sur ces données et extraire les données identifiées par ces recherches.

Le stockage de données chiffrées sous chiffrement complètement homomorphe (ou 'FHE', de l'Anglais *Fully Homomorphic Encryption*) et le requêtage sur données chiffrées en FHE sont connus. Mais le chiffrement FHE est lourd et empêche une exploitation à échelle commerciale de cette solution.

Une autre solution permettant la recherche sur données chiffrées est le chiffrement cherchable à clé publique ou PEKS ; mais cette technique comporte des possibilités insuffisantes de traitement sur données chiffrées.

Il existe donc un besoin pour des solutions d'interrogation de base de données, qui soient souples, exploitables sur des bases de données d'une certaine taille à un coût et un temps de calcul modéré, et cela tout en assurant le plus haut degré de confidentialité pour les données stockées dans la base de données. Il est notamment souhaité que ces solutions permettent de garder les informations stockées dans la base de données confidentielles vis-à-vis de l'exploitant de la base de données et plus généralement de toute tierce partie autre que les parties prenantes ayant directement à connaître les informations enregistrées dans la base et les concernant.

Références

Référence 1 : Aloufi, A. a. (2021). Computing blindfolded on data homomorphically encrypted under multiple keys: An extended survey. ACM Computing Surveys (CSUR), 1--37.

**EXPOSÉ DE L'INVENTION**

La présente invention vise à proposer un procédé d'interrogation confidentielle permettant d'éviter les risques suggérés ci-dessus.

A cette fin, il est proposé un procédé d'interrogation confidentielle par au moins un client d'une base de données, hébergée par un serveur ;

la base de données comprenant :

- des données de filtrage, chaque donnée de filtrage présentant au moins un champ de filtrage chiffré sous un chiffrement de filtrage, qui est un crypto-système permettant un chiffrement cherchable ; et
- des données d'identification, chaque donnée d'identification présentant au moins un champ d'identification chiffré sous un chiffrement d'identification, le chiffrement d'identification permettant un calcul sur données chiffrées ;

la base de données étant structurée de manière à permettre, à partir d'une donnée de filtrage, d'identifier zéro, une ou une pluralité de données d'identification associées à la donnée de filtrage ;
le procédé comprenant les étapes suivantes :

S10) un client définit une requête comprenant un indice cherché et une condition ;
l'indice cherché étant un vecteur définissant une valeur pour au moins un champ de filtrage recherché ;
la condition étant une condition à satisfaire par une ou des données d'identification et fonction de la valeur d'au moins un champ d'identification ;
le client calcule ou fait calculer une porte dérobée (en Anglais, 'trapdoor') d'extraction pour l'indice cherché, chiffrée sous ledit chiffrement de filtrage, et transmet ou fait transmettre au serveur (SP) ladite porte dérobée d'extraction chiffrée ainsi que ladite condition chiffrée sous le chiffrement d'identification ;
S20) en appliquant la porte dérobée d'extraction à la base de données, le serveur extrait de la base de données une base de données de filtrage réduite, comprenant les données de filtrage dont le(s) champ(s) de filtrage recherché(s) ont des valeurs égales à celles des champs correspondants de l'indice cherché ;

S30) le serveur extrait de la base de données une base de données d'identification réduite, comprenant toute donnée d'identification associée à au moins une donnée de la base de données de filtrage réduite ;

S40) en mettant en œuvre une méthode de requêtage confidentiel, le serveur identifie au sein de la base de données d'identification réduite toute donnée d'identification satisfaisant ladite condition ;

S50) le serveur détermine et envoie au client un résultat chiffré obtenu à partir de la ou des donnée(s) d'identification identifiée(s) ; et

S60) le client déchiffre le résultat chiffré et obtient le résultat en clair.

Le crypto-système d'identification est choisi de préférence de manière à être différent du crypto-système de filtrage. Il est choisi en principe de manière à générer un volume de calculs plus faible que celui généré par le cryptosystème d'identification.

Le chiffrement d'identification peut notamment être un chiffrement complètement homomorphe.

Le chiffrement de filtrage peut notamment être un chiffrement cherchable (SE) à clé publique, notamment un chiffrement de type PEKS, ou bien un chiffrement symétrique.

Le crypto-système de chiffrement permettant un calcul sur données chiffrées est de préférence différent du crypto-système de chiffrement cherchable. Notamment, le crypto-système de chiffrement permettant un calcul sur données chiffrées est un chiffrement nécessitant, par comparaison, moins de temps de calcul.

L'expression 'méthode de requêtage confidentiel' désigne ici toute méthode de calcul sur donnée chiffrée permettant, au sein d'une base de données d'identification, l'identification de données spécifiques, dites données d'identification, satisfaisant une condition donnée.

Grâce au procédé défini ci-dessus, grâce à l'extraction préalable réalisée aux étapes S20 et S30, avantageusement l'étape S40 de requêtage confidentiel peut être effectuée sur une base de données extraite dont la taille est réduite, parfois considérablement réduite, par rapport à la taille de la base de données complète.

Dans certains modes de mise en œuvre du procédé, l'étape S10 comprend :

S12) en appliquant un chiffrement de transfert, par exemple par masquage, le client calcule un chiffré de l'indice cherché ;

S14) le client envoie à au moins un fournisseur de service de porte dérobée, le chiffré de l'indice cherché ;

S16) à partir du chiffré de l'indice cherché, en utilisant une clé secrète, ledit au moins un fournisseur(s) de services de porte dérobée calcule une porte dérobée chiffrée sous le chiffrement de filtrage du chiffré de l'indice cherché, dite porte dérobée primaire, et envoie la porte dérobée primaire au client ;

S18) en retirant le chiffrement de transfert de la porte dérobée primaire, le client calcule la porte dérobée d'extraction et transmet celle-ci au serveur.

On comprend que dans ces modes de mise en œuvre, le crypto-système de transfert comporte une opération de déchiffrement (Unmask_β) associée au chiffrement de transfert (β) et qui permet de calculer la porte dérobée en clair ($T(m)$) à partir de la porte dérobée primaire $T([m]\beta)$, aussi notée $T(m^\beta)$, par l'opération :

$$Unmask_\beta(T(m^\beta)) = T(m).$$

Dans certains de ces derniers modes de mise en œuvre du procédé, à l'étape S14, le chiffré de l'indice cherché est envoyé à un ensemble de fournisseurs de services de porte dérobée ; la clé secrète détenue par chacun est une clé secrète partielle de filtrage du fournisseur de services de porte dérobée ; et à l'étape S16, à partir du chiffré de l'indice cherché, chaque fournisseur de services parmi une pluralité desdits fournisseurs de services de porte dérobée calcule une porte dérobée primaire partielle en utilisant sa clé secrète partielle et renvoie celle-ci (la porte dérobée primaire partielle calculée) au serveur ; à partir desdites portes dérobées primaires partielles, le serveur calcule la porte dérobée primaire.

De préférence, le chiffrement de transfert est un chiffrement de transfert à seuil, et à l'étape S16, le serveur calcule la porte dérobée primaire ($T([m]\beta)$) à partir desdites portes dérobées primaires partielles seulement si un seuil requis par le chiffrement de transfert à seuil est atteint.

Par ailleurs, dans certains modes de mise en œuvre, l'étape S50 comporte les opérations suivantes :

S52) le serveur obtient le résultat chiffré sous double chiffrement, à savoir sous le chiffrement d'identification et sous un chiffrement supplémentaire, dit chiffrement de client, que le client est apte à déchiffrer ;

S54) le serveur transmet le résultat sous double chiffrement à au moins un fournisseur de service de déchiffrement ;

S56) ledit au moins un fournisseur de services de déchiffrement retire le chiffrement d'identification du résultat sous double chiffrement, obtenant ainsi ledit résultat chiffré, qu'il transmet au client.

Dans ces modes de mise en œuvre, le chiffrement de client est appliqué comme une surcouche de chiffrement au chiffré sous chiffrement d'identification (typiquement, un chiffrement FHE). Le chiffrement de client est choisi de telle sorte que le retrait du chiffrement d'identification par les fournisseurs de services à l'étape S56 conserve le chiffrement de client.

Différentes variantes peuvent être choisies pour obtenir le résultat chiffré sous double chiffrement.

Selon une première variante, pour obtenir ledit le résultat chiffré sous double chiffrement, à l'étape S52 le serveur détermine le résultat sous chiffrement d'identification, puis applique à ce résultat le chiffrement de client, de manière à obtenir le résultat chiffré sous double chiffrement.

Selon une deuxième variante, pour obtenir ledit le résultat chiffré sous double chiffrement : à l'étape S10, le client transmet ou fait transmettre au serveur ladite condition chiffrée sous double chiffrement, à savoir sous le chiffrement d'identification et sous le chiffrement de client ; à la suite de l'étape S30, le serveur chiffre la base de données d'identification réduite sous chiffrement de client ; et à l'étape S50, le serveur détermine le résultat chiffré sous double chiffrement.

Dans certains des modes de mise en œuvre dans lesquels le résultat est chiffré sous double chiffrement, à l'étape S54, le résultat sous double chiffrement est envoyé à un ensemble de fournisseurs de services de déchiffrement ; la clé secrète détenue par chacun des fournisseurs de services est une clé secrète partielle de filtrage du fournisseur de services de déchiffrement ; et à l'étape S56, chaque fournisseur de services parmi une pluralité desdits fournisseurs de services de déchiffrement effectue un déchiffrement partiel du résultat sous double chiffrement en retirant de celui-ci le chiffrement d'identification en utilisant sa clé secrète partielle et obtient ainsi un résultat partiellement déchiffré qu'il renvoie au serveur ; à partir desdits résultats partiellement déchiffrés, le serveur calcule le résultat chiffré.

Dans ces derniers modes de mise en œuvre, de préférence le chiffrement d'identification est un chiffrement d'identification à seuil ; et à l'étape S50, le serveur calcule le résultat chiffré à partir des résultats partiellement déchiffrés seulement si un seuil requis pour le chiffrement d'identification à seuil est atteint.

Plusieurs possibilités peuvent être envisagées pour le chiffrement de client.

Dans certains de ces derniers modes de mise en œuvre, dans le cas où le chiffrement d'identification est un chiffrement homomorphe, le chiffrement de client est un chiffrement symétrique.

L'étape S52 peut alors comprendre l'application de ce chiffrement symétrique (qui est par exemple un chiffrement AES, un chiffrement par masquage, etc.) au résultat chiffré.

Dans ces modes de mise en œuvre, après déchiffrement par les fournisseurs de services, le résultat reste chiffré sous le chiffrement de client symétrique, et le serveur renvoie ce résultat chiffré au client.

Inversement dans d'autres modes de mise en œuvre, dans le cas toujours où le chiffrement d'identification est un chiffrement homomorphe, l'étape S52 comprend une extension du chiffré homomorphe à l'aide (par exemple, par ajout au résultat chiffré) d'une clef publique asymétrique. Une clé publique asymétrique désigne naturellement une clé publique associée à une clef secrète dans le cadre d'un crypto-système de client asymétrique.

L'étape S52 permet donc de calculer un chiffré, chiffré avec deux clefs publiques distinctes. Une telle extension de chiffré FHE peut être faite par exemple avec une forme de concaténation, comme cela est décrit dans [Ref.1].

Le chiffrement de client doit naturellement être déchiffré pour accéder au résultat en clair.

Dans ces modes de mise en œuvre, de préférence le serveur détient ladite clé publique asymétrique, et le client détient une clé secrète asymétrique correspondante ; à l'étape S56, le chiffrement de client est appliqué à l'aide de ladite clé publique asymétrique ; et à l'étape S60, le chiffrement de client est retiré à l'aide de ladite clé secrète asymétrique.

## BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :

- la figure 1 est une vue schématique en perspective illustrant un système de gestion de transport de marchandises configuré pour permettre la mise en œuvre d'un procédé selon la présente divulgation ;
- la figure 2 est une vue schématique illustrant un premier mode de mise en œuvre d'un procédé selon la présente divulgation ;
- la figure 3 est une vue schématique illustrant une première variante d'un deuxième mode de mise en œuvre d'un procédé selon la présente divulgation ; et
- la figure 4 est une vue schématique illustrant une deuxième variante du deuxième mode de mise en œuvre d'un procédé selon la présente divulgation..

## DESCRIPTION DÉTAILLÉE DE L'INVENTION

A titre d'exemple de réalisation non limitatif, deux modes de mise en œuvre du procédé d'interrogation confidentielle selon la présente divulgation vont maintenant être présentés.

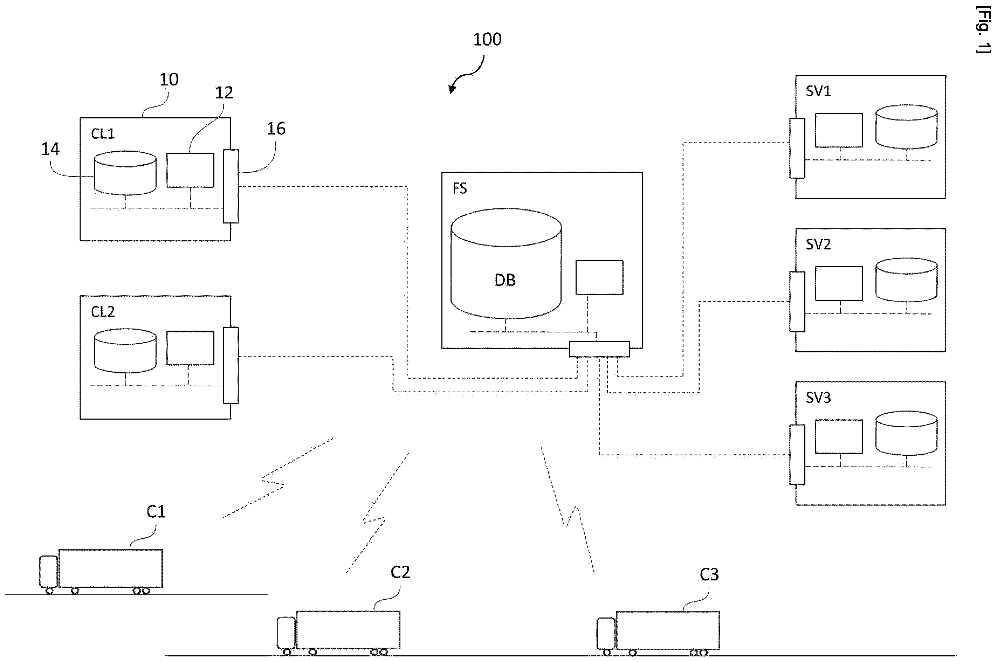

Comme cela est illustré par la Fig.1, on considère dans cet exemple une situation dans laquelle une flotte de camions C1, C2, C3, ... transporte des marchandises entre différentes villes. Plus précisément, chaque camion doit successivement exécuter différents trajets. Lors de chaque trajet, il transporte des marchandises d'une ville de départ à une ville de destination.

Les camions C1, C2, C3,... transportent des marchandises appartenant à un certain nombre de sociétés, appelées 'clients' au sens de la présente divulgation, représentées par deux clients CL1, CL2 sur la Fig.1.

La gestion des transports de marchandises réalisés par la flotte de camions est réalisée à l'aide d'un système 100 de gestion de marchandises représenté sur la Fig.1. Ce système 100 constitue un exemple de système d'interrogation confidentielle au sens de la présente divulgation.

La gestion des opérations de transport de marchandises est assurée par un fournisseur de services, qui interagit avec les différents acteurs qui interviennent dans ces opérations : les camions (C1, C2, C3,...), les clients (CL1, CL2,...), et un ensemble de tiers de confiance, appelés superviseurs, notés SV1, SV2, SV3, ... qui sont intégrés au dispositif pour assurer la confidentialité des traitements réalisés sur les données traitées.

Le fournisseur de services met en œuvre un serveur S, qui comporte une base de données DB dans laquelle sont stockées les données relatives aux trajets effectués par la flotte de camions.

Chaque intervenant, qu'il soit un camion, un client, le serveur, un des superviseurs, met en œuvre un calculateur qui a l'architecture générale d'un ordinateur. Cette architecture est décrite ci-dessous dans le cas du client CL1, mais chacun des intervenants dispose d'un calculateur présentant une architecture analogue.

Le calculateur 10 du client CL1 dispose de l'architecture matérielle d'un ordinateur, telle qu'illustrée schématiquement sur la figure 1. De manière générale, tout calculateur comprenant au moins une mémoire apte à enregistrer des données et le programme qui va être présenté plus loin, et un ou plusieurs processeurs aptes à exécuter ce programme, peut être utilisé.

Dans ce mode de mise en œuvre, le calculateur 10 comprend notamment un processeur 12, une mémoire non volatile 14, ainsi que des moyens de communication 16 avec d'autres composants du système de gestion de données 100, dont au moins le calculateur du serveur S.

La mémoire non-volatile 14 du calculateur 10 constitue un support d'enregistrement conforme à la présente divulgation, lisible par le processeur 12 et sur lequel est enregistré un programme d'ordinateur conforme à la présente divulgation, comportant des instructions pour l'exécution des étapes du procédé d'interrogation confidentielle selon la présente divulgation qui doivent être exécutées par le client CL1.

Pour permettre la bonne exécution des différentes opérations de transport de marchandises commandées par les clients auprès des différents camions, le fournisseur de services est amené à gérer des données au sein de la base de données DB.

Ces données incluent en particulier des données di, i=1.....N, dites 'données-parcours', telles que chaque donnée di contient des informations relatives à un parcours effectué par un camion. Chaque donnée-parcours di comporte cinq champs : 'camion', 'date', 'ville_départ', 'ville-étape', 'ville_destination'.

Les données incluent également, pour un parcours donné effectué par un camion Ci donné, une donnée-horaire comportant deux champs : 'heure_départ' et 'heure_arrivée'.

Les données incluent également, pour un parcours donné, une donnée autre DA incluant un champ 'distance'.

De manière importante, les sociétés (les clients) qui font appel au fournisseur de services pour les assister dans leurs opérations de transports de marchandises souhaitent que leurs données, c'est-à-dire les informations relatives à leurs opérations, ne soient connues ni des autres clients, ni même du fournisseur de services.

Plus précisément, le système de gestion des opérations de transport de marchandises doit permettre à chaque client d'effectuer des requêtes, c'est-à-dire des recherches d'informations au sein de ses données et cela, sans que ni ses requêtes ni les résultats de ces requêtes ne soient accessibles au fournisseur de services ou aux autres clients.

Pour permettre ce fonctionnement, les dispositions suivantes sont prises.

On détermine par avance les données à enregistrer dans la base de données. De plus, au sein de ces différentes données, on détermine quels champs seront des champs de filtrage et quels champs seront des champs d'identification.

Les données de filtrage sont généralement des mots-clés et des variables-clés dont on pourra spécifier la valeur afin d'extraire une partie de la base de données et ainsi pouvoir exécuter des opérations de requêtage confidentiel sur une base de données de taille réduite.

En l'occurrence, il est déterminé que les recherches d'information se font sur la base des champs 'camion', 'date', 'ville_départ', 'ville-étape', 'ville_destination' : Ces champs sont donc rassemblés dans des données de filtrage DF, qui sont donc en l'occurrence les données-parcours.

Dans certains modes de mise en œuvre, plutôt que d'enregistrer les données de filtrage seulement sous chiffrement cherchable dans la base de données, ces données sont d'abord 'hachées' (c'est-à-dire qu'une fonction de hachage leur est appliquée) ; et c'est le hash de ces données qui est enregistré sous le chiffrement de filtrage dans la base de données.

Il est déterminé de plus que les informations cherchées portent sur les champs heure_départ et heure_arrivée : Ces champs sont donc rassemblés dans des données d'identification DI, qui sont donc dans le cas présent les données-horaires.

La base de données est donc structurée de manière à comprendre :

- une base de données de filtrage contenant les données de filtrage DF, qui dans cet exemple sont les donnée-parcours, comprenant par exemple une donnée { date : 20240419 ; ville_départ : Paris ; ville_étape : Lyon ; ville_destination : Marseille }
- une base de données d'identification contenant les données d'identification DI, qui dans cet exemple sont les donnée-horaire, comprenant par exemple une donnée { heure_départ : 6h10 ; heure_arrivée : 22h20 ; camion : CL2 }
- une base de données autres, contenant les donnée-autre DA, comme dans cet exemple une donnée de type { distance : 800 km }.

La base de données est de plus structurée de telle sorte qu'à partir de chaque donnée de filtrage DF (chaque donnée-parcours), le serveur est en mesure d'identifier les données d'identification DI correspondantes (les données-horaires).

On envisage le cas par exemple où le client CL1 cherche à obtenir de manière confidentielle des informations relatives à l'heure de départ ou l'heure d'arrivée de camions, à partir de la base de données DB.

Ces informations cherchées sont des données d'identification, qui vont être extraites et retournées au client si elles respectent une certaine condition portant sur les données d'identification (à savoir, les heures de départ et d'arrivée des différents camions), et aussi à condition qu'elles concernent spécifiquement certains camions, préalablement sélectionnés par filtrage dans la base de données en fonction des données de filtrage (les données-parcours).

La méthode d'interrogation de la base de données comprend deux étapes principales : une étape de filtrage (opérations S20-S30) et une étape d'identification (opérations S40-S50).

Lors de l'étape de filtrage, les données de filtrage sont utilisées pour filtrer les données de la base de données, c'est-à-dire pour extraire un sous-ensemble de données de filtrage de la base de données. A partir de ces données de filtrage, les données d'identification associées à ces données de filtrage vont alors être extraites, ou du moins identifiées comme étant les données de la base de données à partir desquelles l'information cherchée dans la base de données peut être extraite.

L'étape d'identification pourra alors avoir lieu à partir de la base de données réduite ainsi constituée.

Pour permettre la mise en œuvre de la méthode, un crypto-système de filtrage SE et un crypto-système d'identification FHE sont choisis à l'avance.

Tout crypto-système pemettant de mettre en œuvre une méthode de chiffrement cherchable (dit 'SE', de l'Anglais Searchable Encryption) peut être adopté comme crypto-système de filtrage. Dans l'exemple présenté ici, un crypto-système SE, à clé publique et recherche par mot-clé (dit 'PEKS', de l'Anglais *Public key Encryption with Keyword Search)*, est choisi. Le crypto-système PEKS peut utiliser la cryptographie sur courbes elliptiques (ECC), ou encore la cryptographie sur réseaux euclidiens.

Il est aussi possible d'utiliser un crypto-système permettant de réaliser un chiffrement cherchable symétrique, ou 'SSE', de l'Anglais *Symmetric Search Encryption.*

Par ailleurs, tout crypto-système permettant un calcul sur données chiffrées peut être adopté comme crypto-système d'identification. Dans l'exemple présenté ici, un cryptosystème asymétrique complètement homomorphe FHE (de l'Anglais *'Fully Homomorphic Encryption'*) est choisi.

Une fois les caractéristiques de la base de données fixées, celle-ci est progressivement constituée.

Ainsi, avant, pendant et à la fin de chaque trajet, chaque camion transmet les informations nécessaires pour constituer la base de données DB : Pour chaque trajet à réaliser ou réalisé par un camion, celui-ci transmet toute information à la base de données de manière à constituer et tenir à jour la donnée-parcours, la donnée-horaire, et la ou les autres données décrivant le trajet à réaliser ou réalisé par le camion.

Lors de l'envoi de chaque information à la base de données, celle-ci est chiffrée. Plus précisément, toute donnée de filtrage est chiffrée en utilisant la clé publique $pk_{SE}$ du crypto-système de filtrage, SE ; et toute donnée d'identification et toute donnée autre est chiffrée en utilisation la clé publique $PK_{FHE}$ du crypto-système d'identification, FHE.

La base de données est ainsi constituée et régulièrement tenue à jour par les camions et contient toutes les informations relatives à leurs trajets.

Un client peut alors effectuer une requête dans la base de données de la manière suivante.

Une telle requête vise à extraire certaines informations de la base de données. Les informations cherchées sont des informations déterminées à partir de données pertinentes qui sont identifiées au sein de la base de données. Les informations cherchées peuvent être simplement tout ou partie (certains champs) de ces données pertinentes, ou bien elles peuvent être des valeurs déterminées (par calcul) à partir de ces données pertinentes.

Ces données pertinentes mentionnées ici sont les données de la base de données pour lesquelles la valeur d'au moins un champ de filtrage vaut certaine(s) valeur(s) prédéterminée(s), et de plus une certaine condition est satisfaite, condition qui dépend de la valeur d'au moins un champ d'identification (par exemple, le champ d'identification a une valeur qui appartient à une certaine plage de valeurs.

Les données pertinentes incluent nécessairement des valeurs obtenues à partir des données d'identification, et dans certains cas incluent également des valeurs obtenues à partir des données de filtrage auxquelles ces données d'identification sont associées.

On considère par exemple le cas où une requête définit les valeurs de deux champs de filtrage, par exemple : ville_départ = Paris et ville_arrivée = Marseille, et où l'on veut connaître les heures de départ de camions qui vérifient : heure_départ > 07h00.

La requête comprend un indice cherché m et une condition c.

L'indice cherché m est un vecteur définissant une valeur pour au moins un champ de filtrage recherché. En l'occurrence, c'est le vecteur à deux composantes\ m = { ville_départ : Paris ; ville_arrivée : Marseille } (définissant deux valeurs que doivent prendre les champs de filtrage indiqués).

La condition c est une condition à satisfaire par une ou des données d'identification, et qui est fonction de la valeur d'au moins un champ d'identification. En l'occurrence, c'est le vecteur à une seule composante c = { heure_départ > 07h00. } : C'est une condition que doit remplir le champ d'identification 'heure_départ'.

La requête peut également préciser comment le résultat à renvoyer au client est déterminé à partir des données identifiées comme pertinentes. Ce résultat renvoyé au client peut, de manière générale, être un résultat calculé à partir de la ou des données identifiées à l'issue de la méthode d'interrogation, par toute fonction appropriée (par exemple, dans certains cas le résultat peut être une valeur booléenne (OUI/NON) indiquant seulement la présence ou l'absence de données présentant les valeurs souhaitées.

<u>1<sup>er</sup> mode de mise en œuvre: sans superviseurs</u>

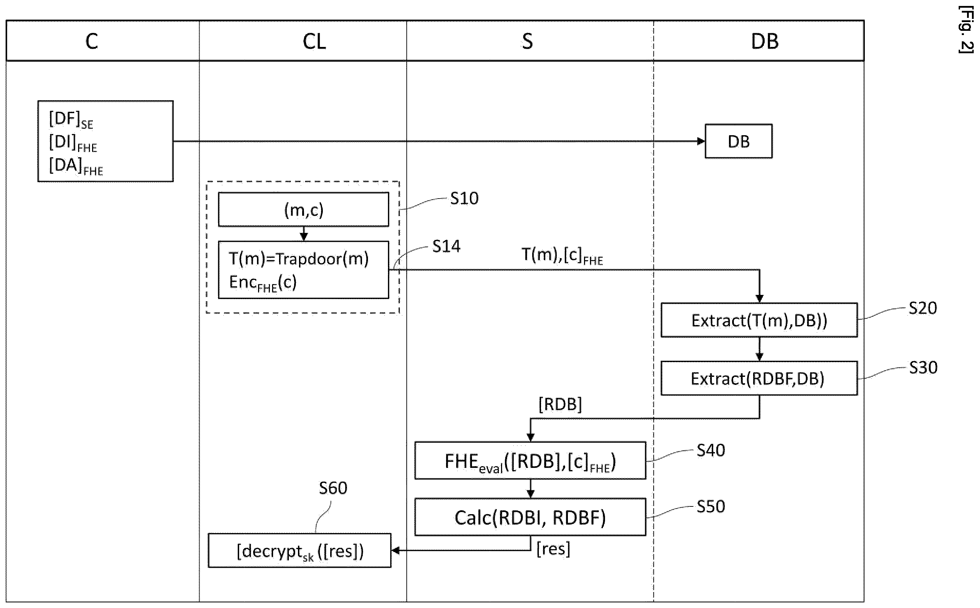

Un premier mode de mise en œuvre des méthodes selon la présente divulgation est présenté sur la Fig.2.

Dans ce mode de mise en œuvre, le système de gestion des opérations de transport de marchandises ne fait pas appel à des superviseurs. Il implique uniquement les camions, les clients, et le fournisseur de services, qui met en œuvre un serveur S. Le serveur S gère les données relatives aux trajets des camions au sein de la base de données DB.

On fait ici l'hypothèse que l'un des clients émet les paires de clés publique/privée à la fois ($pk_{SE}$; $sk_{SE}$) du crypto-système SE et ($PK_{FHE}$; $SK_{FHE}$) du crypto-système FHE. Il transmet les clés publiques aux camions. Il transmet les clés publiques et les clés privées, uniquement, aux autres clients.

Sur la Fig.2, les opérations réalisées par les différents acteurs sont représentées schématiquement dans quatre colonnes ; ces colonnes contiennent donc les opérations réalisées respectivement par les camions (C), par les clients (CL), par le fournisseur de services (c'est-à-dire par le serveur S), par ou au sein de la base de données (DB).

La méthode comprend la réalisation des opérations suivantes.

A l'étape S10, un client CL définit sa requête, par exemple la requête (m,c) présentée précédemment.

Le client calcule une porte dérobée d'extraction Trapdoor(m) = T(m) à l'aide de la clé privée $sk_{SE}$, et transmet cette porte dérobée d'extraction T(m) au serveur S.

Il chiffre de plus la condition c, mais cette fois à l'aide de la clé publique $PK_{FHE}$ du chiffrement d'identification, et transmet la condition chiffrée $[c]_{FHE}$ au serveur S.

A l'étape S20, en utilisant la porte dérobée d'extraction T(m), le serveur S extrait de la base de données de filtrage une base de données de filtrage réduite RDBF. Cette base de données de filtrage réduite comprend toutes les données de filtrage dont les champs de filtrage recherchés ville_départ et ville_arrivée ont des valeurs égales à celles des champs correspondants de l'indice cherché m. Il extrait donc seulement les données de filtrage relatives à des parcours de Paris à Marseille. Avantageusement, ces données sont de taille bien réduite par rapport à la base de données complète. Cette extraction est faite en utilisant toute méthode adaptée de chiffrement cherchable à clé publique fondée sur le crypto-système SE.

A l'étape S30, le serveur S extrait de la base de données d'identification une base de données d'identification réduite RDBI, comprenant toutes les données d'identification qui sont associées à au moins une donnée de la base de données de filtrage réduite.

Les deux bases RDBF et RDBI conjointement constituent une base de données réduite RDB.

A l'étape S40, en mettant en œuvre une méthode de requêtage confidentiel $FHE_{eval}$, le serveur identifie alors au sein de la base de données d'identification réduite RDBI toutes les données d'identification DI qui satisfont la condition c, fonction de la valeur d'au moins un champ d'identification : ce sont les données d'identification qui satisfont la condition c : « heure_départ > 07h00 ». Ces données sont un exemple de données dites 'pertinentes', mentionnées précédemment.

Ces données d'identification sont chiffrées sous le chiffrement d'identification (FHE).

A l'étape S50, à partir des données pertinentes identifiés, le serveur détermine alors le résultat chiffré [res]. Cette détermination peut inclure notamment l'extraction, parmi les données identifiées comme indiqué ci-dessus, de la ou les données et/ou du ou des champs à retourner au client. Le résultat peut être fonction des données de filtrage associées aux données d'identification identifiées.

Le résultat [res] peut aussi être déterminé par calcul à partir des données pertinentes, notamment à partir des données d'identification satisfaisant la condition c, identifiées comme indiqué ci-dessus. Ce calcul peut être réalisé par toute fonction appropriée.

Le calcul est conduit de manière à obtenir un résultat chiffré. Dans ce résultat, le plus souvent au moins une partie du résultat (qui dépend des données d'identification) est chiffrée sous chiffrement d'identification.

Une fois le résultat chiffré [res] obtenu, le serveur le renvoie alors au client CL.

Dans certains modes de mise en œuvre, le résultat chiffré comporte les données d'identification identifiées, et pour chacune la donnée de filtrage qui a permis de l'identifier.

Le résultat peut donc dans ce cas être obtenu sous une forme chiffrée qui inclut deux types de chiffrement, SE et FHE. Le résultat peut par exemple s'écrire sous la forme d'un ensemble de données mixtes, chaque donnée mixte associant une donnée d'identification sous chiffrement d'identification et une donnée de filtrage sous chiffrement de filtrage, soit :

$$[res]_{SE+FHE} = (([DF]_{SE,1} ; [DI]FHE,1) ; ([DF]_{SE,2} ; [DI]FHE,2) ; ([DF]_{SE,3} ; [DI]FHE,3) .... ([DF]_{SE,N} ; [DI]_{FHE,N}))$$

en supposant que N données d'identification satisfaisant au critère ont été identifiées.

A l'étape S60, le client CL1 déchiffre le résultat chiffré [res], à l'aide des clés privées des crypto-systèmes SE et FHE respectivement pour les parties du résultat sous chiffrement de filtrage et sous chiffrement d'identification, et obtient le résultat en clair res.

## 2ème mode de mise en œuvre: avec superviseurs

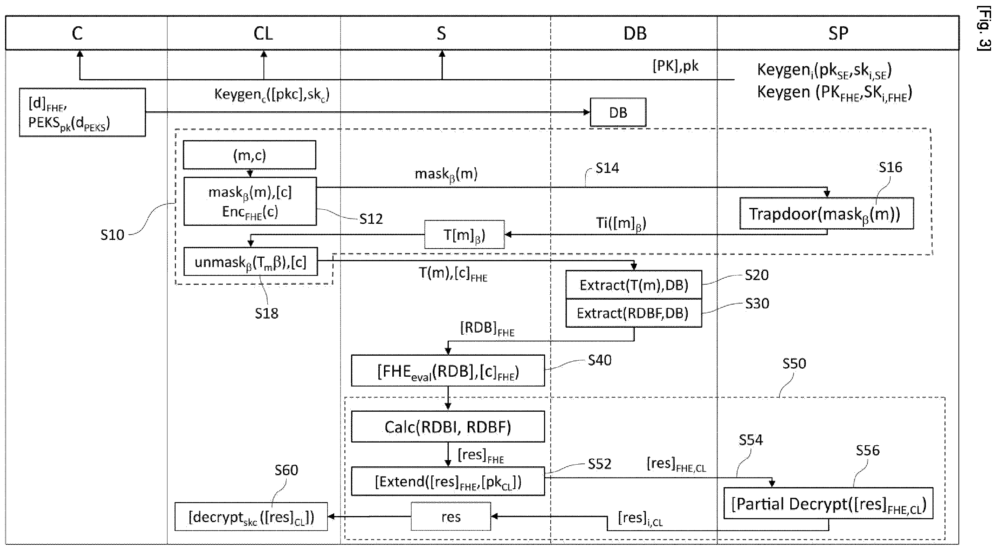

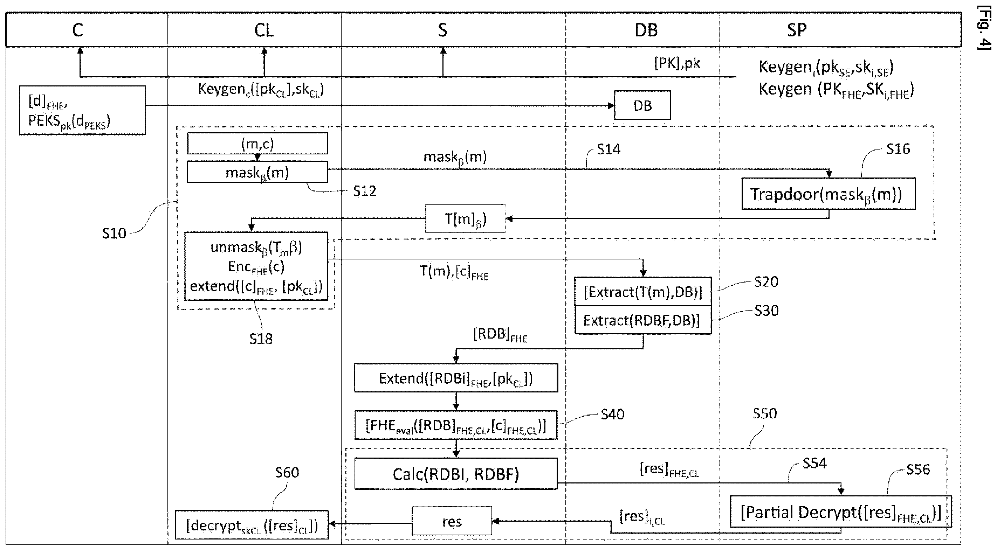

Un deuxième mode de mise en œuvre des méthodes selon la présente divulgation va maintenant être présenté, suivant deux variantes illustrées respectivement par la Fig.3 (1ère variante) et la Fig.4 (2ème variante).

Dans ce mode de mise en œuvre, en plus des acteurs mentionnés pour le premier mode de mise en œuvre, le système de gestion des opérations de transport de marchandises fait appel à des superviseurs, pour éviter notamment la communication de clés privées FHE à l'ensemble des clients. Ces superviseurs se répartissent en deux ensembles, les superviseurs de service de porte dérobée et les superviseurs de service de déchiffrement (ces deux ensembles peuvent être composés ou non des mêmes membres). Dans chaque ensemble, selon le mode de mise en œuvre, il peut y avoir un seul superviseur ou une pluralité de superviseurs.

Dans l'exemple présenté ici, il est fait appel à une pluralité de superviseurs en particulier pour permettre l'utilisation du chiffrement à seuil. Ce protocole de chiffrement avantageusement permet d'éviter qu'un superviseur unique n'ait la possibilité de calculer seul la porte dérobée utilisée à l'étape S20, et/ou n'ait la possibilité de retirer seul le chiffrement d'identification appliqué par le serveur.

De plus ce protocole est robuste dans la mesure où il n'est pas nécessaire que l'ensemble des superviseurs soient présents pour que la tâche réalisée (calcul de la porte dérobée ou déchiffrement du résultat) soit réalisée.

Pour permettre la mise en œuvre du chiffrement par seuil, avant la mise en œuvre de la méthode d'interrogation confidentielle, les superviseurs génèrent les clés nécessaires à la mise en œuvre du procédé. De préférence, chaque superviseur génère sa ou ses propre(s) clé(s) secrète(s) partielle(s) et ses clés publique(s) partielle(s). Les clés publiques partielles sont alors transmises au serveur.

Les clés publiques globales $pk_{SE}$ pour le crypto-système SE et $PK_{FHE}$ pour le crypto-système FHE sont ensuite générées par le serveur à partir des clés publiques partielles respectives de ces deux crypto-systèmes.

Dans le mode de mise en œuvre présenté ici, pour la mise en œuvre du procédé, chacun des superviseurs dispose donc des deux paires de clés suivantes :

- clé publique globale et clé partielle privée ($pk_{SE}$; $sk_{i,SE}$) du crypto-système SE ; et

- clé publique globale et clé partielle privée ($PK_{FHE}$; $SK_{i,FHE}$) du crypto-système FHE.

Dans cet exemple le chiffrement à seuil est utilisé pour chacun des deux crypto-systèmes SE et FHE.

Le serveur transmet les clés publiques globales $pk_{SE}$ et $PK_{FHE}$ aux clients, ainsi qu'aux fournisseurs de données (les camions).

Première variante

Dans une première variante du deuxième mode de mise en œuvre, illustrée par la Fig.3, les opérations réalisées par les différents acteurs sont représentées schématiquement dans cinq colonnes. Ces cinq colonnes décrivent les opérations réalisées respectivement par les camions (C), par les clients (CL), par le fournisseur de services (serveur S), par ou au sein de la base de données (DB), et par les superviseurs (SP).

Pour simplifier, dans le présent exemple illustré par la figure 3, les superviseurs de services de porte dérobée et les superviseurs de services de déchiffrement sont les mêmes entités, appelées 'superviseurs' et notées SP.

Sauf indication contraire, les étapes réalisées dans ce mode de mise en œuvre sont identiques à celles réalisées dans le premier mode de mise en œuvre.

Dans ce mode de mise en œuvre, la présence des superviseurs permet d'assurer un niveau de confidentialité plus élevé.

On suppose que le client CL souhaite soumettre la même requête (m,c) que dans le premier mode de mise en œuvre.

A l'étape S10, le client CL définit la requête (m,c).

A l'étape S12, en appliquant un chiffrement de transfert ($\beta$), par exemple par masquage, le client calcule un chiffré ($[m]_{\beta}$) de l'indice cherché (m). Il calcule également un chiffré de la condition c, sous chiffrement d'identification, par la fonction de chiffrement $Enc_{FHE}$.

Appel aux superviseurs pour le calcul de la porte dérobée

Le client fait ensuite calculer la porte dérobée d'extraction T(m) pour l'indice cherché m par les superviseurs de la manière suivante :

A l'étape S14, le client envoie à chacun des fournisseurs de services de porte dérobée SP, le chiffré $[m]_{\beta}$ de l'indice cherché (m).

A l'étape S16, à partir de ce chiffré $[m]\beta$, en utilisant sa clé secrète partielle $sk_{i,SE}$, chacun des fournisseurs de services de porte dérobée SP calcule une porte dérobée primaire partielle $Ti([m]_{\beta})$ du chiffré sous le chiffrement de filtrage de l'indice cherché (m), et envoie cette porte dérobée primaire partielle $Ti([m]_{\beta})$ au serveur.

Le serveur évalue alors si, en prenant en considération l'ensemble des portes dérobées primaires partielles reçues, le seuil requis par le chiffrement de transfert à seuil est atteint.

Par exemple dans certains modes de mise en œuvre, la porte dérobée primaire peut être calculée dès lors que M parmi N superviseurs sont présents dans le groupe de superviseurs.

Si ce seuil est atteint, à partir des portes dérobées primaires partielles reçues $Ti([m]_{\beta})$, le serveur calcule alors la porte dérobée primaire $(T([m]_{\beta}))$.

Pour cela, le serveur combine toutes les portes dérobées partielles reçues (par exemple, il les multiplie ou les additionne, dans le cas où le CS est sur courbe elliptique) et obtient ainsi la porte dérobée primaire $(T([m]_{\beta}))$.

Le serveur envoie alors celle-ci au client CL.

Ensuite à l'étape S18, le client retire le chiffrement de transfert (retire le masque) de la porte dérobée primaire $(T([m]\beta))$ et obtient ainsi la porte dérobée d'extraction T(m).

Le client envoie alors au serveur la porte dérobée d'extraction T(m) et la condition chiffrée $[c]_{FHE}$.

Les étapes suivantes S20 et S30 sont réalisées comme dans le premier mode de mise en œuvre :

A l'étape S20, en appliquant la porte dérobée d'extraction T(m) à la base de données DB, le serveur SP extrait de la base de données la base de données de filtrage réduite RDBF ; cette extraction est faite sous le chiffrement cherchable à clé publique SE.

A l'étape S30, le serveur SP extrait de la base de données une base de données d'identification réduite RDBI, comprenant toute donnée d'identification associée à au moins une donnée de la base de données de filtrage réduite.

Ensuite à l'étape S40, en mettant en œuvre une méthode de requêtage confidentiel, le serveur identifie au sein de la base de données d'identification réduite RDBI toute donnée d'identification satisfaisant ladite condition c.

Appel aux superviseurs de déchiffrement pour l'envoi du résultat au client

Ensuite à l'étape S50, à partir des données d'identification satisfaisant la condition c, le serveur détermine un premier résultat, dit 'résultat primaire', qui est obtenu sous chiffrement d'identification à partir des données d'identification identifiées (par une fonction de calcul 'Calc').

Note : Dans l'exemple présenté ici le résultat à transmettre au client n'inclut aucune information chiffrée sous chiffrement de filtrage : il n'inclut que des valeurs chiffrées sous le chiffrement d'identification. Pour cette raison le résultat chiffré primaire est noté $[res]_{FHE}$. Dans d'autres modes de mise en œuvre, le résultat peut inclure des données de filtrage associées à des données d'identification et être ainsi chiffré respectivement sous chiffrement de filtrage et sous chiffrement d'identification respectivement pour les données de filtrage et pour les données d'identification.

Dans le mode de mise en œuvre présenté ici, on ne souhaite pas divulguer la clé secrète du chiffrement d'identification à l'ensemble des clients.

Pour cela, le résultat primaire sous chiffrement d'identification $[res]_{FHE}$ va être étendu avec un chiffrement supplémentaire dit chiffrement de client ; le chiffrement d'identification va alors être retiré du résultat sous double chiffrement ; le résultat obtenu $[res]_{CL}$, chiffré sous le seul chiffrement de client, va alors être retourné au client qui pourra alors le déchiffrer.

Les opérations indiquées ci-dessus sont réalisées en faisant appel aux superviseurs, en tant que fournisseurs de services de déchiffrement (partiel).

Ainsi à l'étape S50, les opérations suivantes sont effectuées :

A l'étape S52, le serveur applique au résultat primaire $[res]_{FHE}$ un chiffrement de client CL, que seul le client est apte à déchiffrer, et obtient le résultat sous double chiffrement $[res]_{FHE,CL}$.

On notera qu'il peut être nécessaire d'utiliser un premier crypto-système de client pour les valeurs du résultat qui sont sous chiffrement de filtrage (dites 'données de filtrage'), et un deuxième crypto-systèmes de client pour les valeurs du résultat qui sont sous chiffrement d'identification (dites 'données d'identification').

Deux crypto-systèmes de client sont alors utilisés, l'un pour chiffrer les données de filtrage (chiffrées en SE), l'autre pour chiffrer les données d'identification (chiffrées en FHE).

Dans le cas où le client reçoit au sein du résultat, une ou plusieurs données de filtrage, le crypto-système du chiffrement CL doit vérifier la propriété suivante, pour les données de filtrage : $Dec_{SE}(Enc_{CL}(Enc(m)_{SE})) = Enc(m)_{CL}$, où $Enc_{SE}$, $Dec_{SE}$, sont les fonctions de chiffrement et déchiffrement du crypto-système d'identification FHE et EncCL est la fonction de chiffrement du crypto-système de client.

Pour que les opérations de surchiffrement puissent être suivies d'un déchiffrement partiel, le crypto-système du chiffrement CL doit vérifier la propriété suivante, pour les données d'identification : $Dec_{FHE}(Enc_{CL}(Enc(m)_{FHE})) = Enc(m)_{CL}$, où $Enc_{FHE}$, $Dec_{FHE}$, sont les fonctions de chiffrement et déchiffrement du crypto-système d'identification FHE et EncCL est la fonction de chiffrement du crypto-système de client.

A l'étape S54, le serveur transmet le résultat primaire $[res]_{SE+FHE,CL}$ sous double chiffrement aux superviseurs SP (en tant que fournisseurs de service de transchiffrement).

A l'étape S56, chacun des superviseurs retire partiellement les chiffrements de filtrage SE et d'identification FHE respectivement des données de filtrage et d'identification incluses dans le résultat primaire $[res]_{FHE,CL}$, et obtient ainsi un résultat partiellement déchiffré ($[res]_{i,CL}$), chiffré sous chiffrement de client, et partiellement déchiffré pour ce qui concerne les chiffrements de filtrage SE et d'identification FHE respectivement des données de filtrage et d'identification incluses dans le résultat primaire $[res]_{FHE,CL}$.

Ce résultat chiffré est alors transmis au serveur.

Le serveur reçoit les différents résultats partiellement déchiffrés ($[res]_{i,CL}$), chacun sous chiffrement client.

Le serveur vérifie si le seuil requis pour le chiffrement d'identification à seuil est atteint.

Si ce seuil est atteint, le serveur combine ces résultats et obtient ainsi le résultat sous chiffrement de client $[res]_{CL}$.

Le serveur retourne alors ce résultat $[res]_{CL}$ au client.

A l'étape S60, le client déchiffre le résultat en retirant le chiffrement de client du résultat reçu $[res]_{CL}$.

<u>Deuxième variante du deuxième mode de mise en œuvre</u>

Dans la deuxième variante du deuxième mode de mise en œuvre, les étapes impliquant le chiffrement cherchable sont identiques aux étapes correspondantes de la première variante. Seules les étapes faisant intervenir le chiffrement d'identification diffèrent.

A l'étape S18, comme dans la première variante, le client retire le chiffrement de transfert (retire le masque) de la porte dérobée primaire $(T([m]\beta))$ et obtient ainsi la porte dérobée d'extraction $T(m)$.

Mais dans la deuxième variante, à l'étape S18 le client de plus d le chiffrement appliqué à la condition à satisfaire, c, déjà chiffrée sous chiffrement FHE, $[c]_{FHE}$ en utilisant sa clef publique pour le chiffrement de client, $PK_{CL}$, et obtient ainsi la condition $[c]_{FHE,CL}$.sous double chiffrement : chiffrement d'identification FHE, et chiffrement de client CL.

Cette donnée $[C]_{FHE,CL}$ est envoyée au serveur à la place de $[c]_{FHE}$.

A l'étape S20, l'extraction de la base de données de filtrage réduite RDBF a lieu de la même manière que pour la première variante.

De même à l'étape S30, le serveur SP extrait de la base de données la base de données d'identification réduite RDBI de la même manière que pour la première variante.

Le serveur étend les données FHE de la base de données d'identification réduite [RDBI]$_{FHE}$ à l'aide de la clef publique du client et obtient ainsi ces mêmes données mais sous double chiffrement d'identification et de client, notées donc [RDBI]FHE,CL.

A l'étape S40, le serveur réalise l'évaluation sur les données étendues (sous double chiffrement FHE et CL). Il obtient ainsi le résultat directement sous double chiffrement, par la fonction :

$$FHE_{eval}([RDB]_{FHE,CL}, [c]_{FHE,CL}) = [res]_{FHE,CL}$$

Le résultat étant déjà sous double chiffrement, contrairement à la première variante, le serveur n'a alors pas besoin d'effectuer à ce stade l'extension de celui-ci (le chiffrement sous chiffrement de client). A l'étape S54, comme dans la première variante, il transmet alors le résultat aux superviseurs.

Les superviseurs réalisent alors le déchiffrement partiel du résultat : L'étape S56 ainsi que l'étape S60 de déchiffrement sont identiques à celles de la première variante.

Les méthodes et systèmes selon la présente divulgation ont été présentés dans le cas particulier de la gestion d'une flotte de camions. On comprend naturellement que ces méthodes et systèmes peuvent être développés pour des applications dans tous domaines techniques, comme l'internet des objets, le domaine médical, etc. En effet tout type de données peut être enregistré en base de données de manière à mettre en œuvre les méthodes selon la présente divulgation. Notamment, à tout champ ou tout ensemble de champs d'une quelconque donnée on peut attacher un ou plusieurs mots-clés (ou valeurs-clés), qui serviront alors de données de filtrage au sens de la présente divulgation.

Ces mots ou valeurs-clés peuvent être calculés à partir du ou des champs considérés par l'intermédiaire de toute fonction de classification appropriée.

## Revendications

1. Procédé d'interrogation confidentielle par au moins un client (CL) d'une base (DB) de données (DF,DI,DA) hébergée par un serveur (S), la base de données comprenant :

   - des données de filtrage (DF), chaque donnée de filtrage présentant au moins un champ de filtrage (ville_départ ; ville_destination) chiffré sous un chiffrement de filtrage (SE), qui est un crypto-système permettant un chiffrement cherchable ; et
   - des données d'identification (DI), chaque donnée d'identification présentant au moins un champ d'identification (heure_départ) chiffré sous un chiffrement d'identification (FHE), le chiffrement d'identification permettant un calcul sur données chiffrées ;

   la base de données étant structurée de manière à permettre, à partir d'une donnée de filtrage, d'identifier zéro, une ou une pluralité de données d'identification associées à la donnée de filtrage ;
   le procédé comprenant les étapes suivantes :

   S10) un client définit une requête (m,c) comprenant un indice cherché (m) et une condition (c) ;
   l'indice cherché (m) étant un vecteur définissant une valeur pour au moins un champ de filtrage recherché (ville_départ ; ville_destination) ;
   la condition (c) étant une condition à satisfaire par une ou des données d'identification et fonction d'une valeur d'au moins un champ d'identification ;
   le client calcule ou fait calculer une porte dérobée d'extraction (T(m)) pour l'indice cherché (m), chiffrée sous ledit chiffrement (SE) de filtrage, et transmet ou fait transmettre au serveur (S) ladite porte dérobée d'extraction chiffrée (T(m)), ainsi que ladite condition ([c]$_{FHE}$) chiffrée sous le chiffrement d'identification (FHE) ;
   S20) en appliquant la porte dérobée d'extraction (T(m)) à la base de données (DB), le serveur (S) extrait de la base de données une base de données de filtrage réduite (RDBF), comprenant les données de filtrage dont le(s) champ(s) de filtrage recherché(s) ont des valeurs égales à celles des champs correspondants de l'indice cherché (m) ;
   S30) le serveur (SP) extrait de la base de données une base de données d'identification réduite (RDBI), comprenant toute donnée d'identification associée à au moins une donnée de la base de données de filtrage réduite ;
   S40) en mettant en œuvre une méthode de requêtage confidentiel, le serveur identifie au sein de la base de données d'identification réduite (RDBI) toute donnée d'identification ([di]) satisfaisant ladite condition (c) ;

S50) le serveur détermine et envoie au client un résultat chiffré ($[res]_{FHE}$ ; $[res]_{CL}$) obtenu à partir de la ou des donnée(s) d'identification identifiée(s) ; et

S60) le client déchiffre le résultat chiffré ($[res]_{FHE}$ ; $[res]_{CL}$) et obtient le résultat en clair (res).

**2.** Procédé d'interrogation confidentielle selon la revendication 1, dans lequel l'étape S10 comprend :

S12) en appliquant un chiffrement de transfert ($\beta$), par exemple par masquage, le client calcule un chiffré ($[m]_\beta$) de l'indice cherché (m) ;

S14) le client envoie à au moins un fournisseur de services de porte dérobée (SP), le chiffré ($[m]_\beta$) de l'indice cherché (m) ;

S16) à partir du chiffré ($[m]_\beta$) de l'indice cherché (m), en utilisant une clé secrète ($sk_{SE}$), ledit au moins un fournisseur(s) de services de porte dérobée (SP) calcule une porte dérobée ($[T([m]_\beta)]_{SE}$) chiffrée sous le chiffrement de filtrage du chiffré de l'indice cherché (m), dite porte dérobée primaire, et envoie la porte dérobée primaire ($T([m]_\beta)$) au client (CL1) ;

S18) en retirant le chiffrement de transfert de la porte dérobée primaire ($T([m]_\beta)$), le client (CL1) calcule la porte dérobée d'extraction ($T(m))$) et transmet celle-ci au serveur (S).

**3.** Procédé d'interrogation confidentielle selon la revendication 2, dans lequel à l'étape S14, le chiffré ($[m]\beta$) de l'indice cherché (m) est envoyé à un ensemble de fournisseurs de services de porte dérobée (SP) ; la clé secrète détenue par chacun est une clé secrète partielle de filtrage ($\alpha i$) du fournisseur de services de porte dérobée ; et à l'étape S16, à partir du chiffré ($[m]_\beta$) de l'indice cherché (m), chaque fournisseur de services parmi une pluralité desdits fournisseurs de services de porte dérobée calcule une porte dérobée primaire partielle ($[T_i([m]_\beta)]_{SE}$) en utilisant sa clé secrète partielle ($\alpha i$) et renvoie celle-ci au serveur ; à partir desdites portes dérobées primaires partielles, le serveur calcule la porte dérobée primaire ($T([m]_\beta)$).

**4.** Procédé d'interrogation confidentielle selon la revendication 3, dans lequel le chiffrement de transfert est un chiffrement de transfert à seuil, et à l'étape S16, le serveur calcule la porte dérobée primaire ($T([m]\beta)$) à partir desdites portes dérobées primaires partielles seulement si un seuil requis par le chiffrement de transfert à seuil est atteint.

**5.** Procédé d'interrogation confidentielle selon l'une quelconque des revendications 1 à 4, dans lequel l'étape S50 comporte les opérations suivantes :

S52) le serveur obtient le résultat chiffré sous double chiffrement ($[res]_{FHE,CL}$), à savoir sous le chiffrement d'identification et sous un chiffrement supplémentaire, dit chiffrement de client, que le client est apte à déchiffrer ;

S54) le serveur transmet le résultat sous double chiffrement ($[res]_{FHE,CL}$) à au moins un fournisseur de service de déchiffrement (SP) ;

S56) ledit au moins un fournisseur de services de déchiffrement retire le chiffrement d'identification du résultat sous double chiffrement ($[res]_{FHE,CL}$), obtenant ainsi ledit résultat chiffré ($[res]_{CL}$), qu'il transmet au client (CL).

**6.** Procédé d'interrogation confidentielle selon la revendication 5, dans lequel pour obtenir ledit le résultat chiffré sous double chiffrement, à l'étape S52 le serveur détermine le résultat sous chiffrement d'identification, puis applique à ce résultat le chiffrement de client, de manière à obtenir le résultat chiffré sous double chiffrement ($[res]_{FHE,CL}$).

**7.** Procédé d'interrogation confidentielle selon la revendication 5, dans lequel pour obtenir ledit le résultat chiffré sous double chiffrement :

à l'étape S10, le client transmet ou fait transmettre au serveur (S) ladite condition ($[c]_{FHE}$) chiffrée sous double chiffrement, à savoir sous le chiffrement d'identification (FHE) et sous le chiffrement de client ;

à la suite de l'étape S30, le serveur chiffre la base de données d'identification réduite (RDBI) sous chiffrement de client ; et

à l'étape S50, le serveur détermine le résultat chiffré ($[res]_{FHE,CL}$) sous double chiffrement.

**8.** Procédé d'interrogation confidentielle selon l'une quelconque des revendications 5 à 7, dans lequel à l'étape S54, le résultat sous double chiffrement ($[res]_{FHE,CL}$) est envoyé à un ensemble de fournisseurs de services (SP) de déchiffrement ; la clé secrète détenue par chacun des fournisseurs de services est une clé secrète partielle de filtrage ($\alpha i$) du fournisseur de services de déchiffrement ; et à l'étape S56, chaque fournisseur de services parmi une pluralité desdits fournisseurs de services de déchiffrement effectue un déchiffrement partiel du résultat sous double chiffrement ($[res]_{FHE,CL}$) en retirant de celui-ci le chiffrement d'identification en utilisant sa clé secrète partielle ($\alpha i$) et obtient ainsi un résultat partiellement déchiffré ($[res]_{i,FHE}$) qu'il renvoie au serveur ; à partir desdits résultats partiellement déchiffrés ($[res]_{i,FHE}$), le serveur calcule le résultat chiffré ($[res]_{CL}$).

9. Procédé d'interrogation confidentielle selon la revendication 8, dans lequel le chiffrement d'identification est un chiffrement d'identification à seuil ; et à l'étape S50, le serveur calcule le résultat chiffré ($[res]_{CL}$) à partir des résultats partiellement déchiffrés ($[res]_{i,FHE}$) seulement si un seuil requis pour le chiffrement d'identification à seuil est atteint.

10. Procédé d'interrogation confidentielle selon l'une quelconque des revendications 5 à 9, dans le cas où le chiffrement d'identification est un chiffrement homomorphe (FHE), dans lequel le chiffrement de client est un chiffrement symétrique.

11. Procédé d'interrogation confidentielle selon l'une quelconque des revendications 5 à 9, dans le cas où le chiffrement d'identification est un chiffrement homomorphe (FHE), dans lequel l'étape S52 comprend une extension du chiffré homomorphe à l'aide d'une clef publique asymétrique ($PK_{CL}$).

12. Procédé d'interrogation confidentielle selon la revendication 11, dans lequel le serveur détient ladite clé publique asymétrique ($PK_{CL}$), et le client détient une clé secrète asymétrique correspondante ($sk_{CL}$) ; à l'étape S52, le chiffrement de client est appliqué à l'aide de ladite clé publique asymétrique ($PK_{CL}$) ; et à l'étape S60, le chiffrement de client est retiré à l'aide de ladite clé secrète asymétrique ($sk_{CL}$).

13. Procédé d'interrogation confidentielle selon l'une quelconque des revendications 1 à 12, dans lequel le chiffrement d'identification est un chiffrement complètement homomorphe (FHE).

14. Procédé d'interrogation confidentielle selon l'une quelconque des revendications 1 à 13, dans lequel le chiffrement de filtrage est un chiffrement cherchable à clé publique, notamment un chiffrement de type PEKS, ou bien un chiffrement symétrique.

[Fig. 1]

EP 4 672 066 A1

[Fig. 2]

EP 4 672 066 A1

| C | CL | S | DB |
|---|----|---|----|

$[DF]_{SE}$
$[DI]_{FHE}$
$[DA]_{FHE}$

DB

(m,c) — S10

T(m)=Trapdoor(m)
$Enc_{FHE}(c)$ — S14

$T(m),[c]_{FHE}$

Extract(T(m),DB)) — S20

Extract(RDBF,DB) — S30

[RDB]

$FHE_{eval}([RDB],[c]_{FHE})$ — S40

S60

Calc(RDBI, RDBF) — S50

[decrypt$_{sk}$([res]) ← [res]

[Fig. 3]

EP 4 672 066 A1

| C | CL | S | DB | SP |
|---|----|---|----|----|

$Keygen_i(pk_{SE}, sk_{i,SE})$
$Keygen(PK_{FHE}, SK_{i,FHE})$

[PK], pk

$Keygen_c([pkc], sk_c)$

$[d]_{FHE},$
$PEKS_{pk}(d_{PEKS})$

DB

(m,c)

$mask_\beta(m)$ — S14 — S16

$mask_\beta(m), [c]$
$Enc_{FHE}(c)$

$Trapdoor(mask_\beta(m))$

S12

$T[m]_\beta)$

$Ti([m]_\beta)$

S10

$unmask_\beta(T_m\beta), [c]$

$T(m), [c]_{FHE}$

S18

$Extract(T(m), DB)$ — S20
$Extract(RDBF, DB)$ — S30

$[RDB]_{FHE}$

$[FHE_{eval}(RDB), [c]_{FHE})$ — S40

S50

$Calc(RDBI, RDBF)$

S54 — S56

$[res]_{FHE}$

S60

$[Extend([res]_{FHE}, [pk_{CL}])$ — S52

$[res]_{FHE,CL}$

$[Partial\ Decrypt([res]_{FHE,CL})$

$[decrypt_{skc}([res]_{CL}])$

res

$[res]_{i,CL}$

[Fig. 4]

EP 4 672 066 A1

| C | CL | S | DB | SP |
|---|---|---|---|---|

[PK],pk

$Keygen_i(pk_{SE}, sk_{i,SE})$
$Keygen\ (PK_{FHE}, SK_{i,FHE})$

$Keygen_c([pk_{CL}], sk_{CL})$

$[d]_{FHE},$
$PEKS_{pk}(d_{PEKS})$

DB

(m,c)

$mask_\beta(m)$ — S14 — S16

$mask_\beta(m)$

S12

$Trapdoor(mask_\beta(m))$

$T[m]_\beta$

S10

$unmask_\beta(T_m\beta)$
$Enc_{FHE}(c)$
$extend([c]_{FHE}, [pk_{CL}])$

$T(m), [c]_{FHE}$

[Extract(T(m),DB)] — S20

Extract(RDBF,DB)] — S30

S18

$[RDB]_{FHE}$

$Extend([RDBi]_{FHE}, [pk_{CL}])$

$[FHE_{eval}([RDB]_{FHE,CL}, [c]_{FHE,CL})]$ — S40

S50

Calc(RDBI, RDBF)

$[res]_{FHE,CL}$ — S54 — S56

S60

$[res]_{i,CL}$

[Partial Decrypt([res]_{FHE,CL})]

$[decrypt_{skCL}([res]_{CL})]$

res

Europäisches
Patentamt

European
Patent Office

Office européen
des brevets

# RAPPORT DE RECHERCHE EUROPEENNE

Numéro de la demande

EP 25 18 5948

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2021/194670 A1 (TAHIR SHAHZAIB [GB] ET AL) 24 juin 2021 (2021-06-24)<br>* abrégé *<br>* alinéas [0001] - [0035] *<br>* alinéas [0042] - [0047] *<br>* revendications 1-32 *<br>* figures 1-3 *<br>----- | 1-14 | INV.<br>G06F21/62<br>H04L9/00<br>H04L9/08 |
| A | LOPEZ JOSE M ET AL: "Privacy-friendly cloud audits with Somewhat Homomorphic and Searchable Encryption",<br>2014 14TH INTERNATIONAL CONFERENCE ON INNOVATIONS FOR COMMUNITY SERVICES (I4CS), IEEE,<br>4 juin 2014 (2014-06-04), pages 95-103, XP032622475,<br>DOI: 10.1109/I4CS.2014.6860559<br>* abrégé *<br>* Section I. Introduction<br>Section V. Encryption Candidates *<br>----- | 1-14 | |

**DOMAINES TECHNIQUES RECHERCHES (IPC)**

G06F
H04L

Le présent rapport a été établi pour toutes les revendications

| Lieu de la recherche | Date d'achèvement de la recherche | Examinateur |
|---|---|---|
| Munich | 30 juin 2025 | Bichler, Marc |

EPO FORM 1503 03.82 (P4C02)

**EP 4 672 066 A1**

**ANNEXE AU RAPPORT DE RECHERCHE EUROPEENNE
RELATIF A LA DEMANDE DE BREVET EUROPEEN NO.**

EP 25 18 5948

30-06-2025

| Document brevet cité au rapport de recherche | Date de publication | Membre(s) de la famille de brevet(s) | Date de publication |
|---|---|---|---|
| US 2021194670 A1 | 24-06-2021 | EP 3908940 A1 | 17-11-2021 |
| | | GB 2580406 A | 22-07-2020 |
| | | US 2021194670 A1 | 24-06-2021 |
| | | WO 2020144449 A1 | 16-07-2020 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ALOUFI, A. A.** Computing blindfolded on data homomorphically encrypted under multiple keys: An extended survey. *ACM Computing Surveys (CSUR)*, 2021, 1-37